# EUROPEAN PATENT APPLICATION

(11) **EP 4 287 230 A1**
(43) Date of publication of application: **06.12.2023**
(21) Application number: 22767185.6
(22) Date of filing: 09.03.2022
(51) Int. Cl.: H01G 11/18, H01G 11/74, H01M 10/613, H01M 10/625, H01M 10/627, H01M 10/647, H01M 10/6553, H01M 50/204, H01M 50/209, H01M 50/50

(54) **POWER STORAGE DEVICE**

(30) Priority: 10.03.2021 JP 2021038207
(71) Applicant: GS Yuasa International Ltd., Kisshoin, Minami-ku, Kyoto-shi, Kyoto 601-8520 (JP)
(72) Inventor: KADOTA, Kohei, Kyoto-shi, Kyoto 601-8520 (JP)
(74) Representative: Isarpatent
(86) International application number: PCT/JP2022/010250
(87) International publication number: WO 2022/191231

(57) **Abstract**

An energy storage apparatus includes: an energy storage device; an electrical component disposed on a path of a current that flows through a main circuit including the energy storage device; a first conductive member including a first connecting portion that is electrically connected to the energy storage device; a second conductive member that is connected to the first conductive member and is electrically connected to the electrical component; and an outer case accommodating the energy storage device, the electrical component, the first conductive member, and the second conductive member, wherein at least one conductive member of the first conductive member and the second conductive member includes: a second connecting portion being a portion that overlaps with an other conductive member and is connected to the other conductive member in a state where the second connecting portion is in contact with the other conductive member; and an extension portion extending from the second connecting portion in a direction away from the path of the current.

## Description

### TECHNICAL FIELD

The present invention relates to an energy storage apparatus that includes energy storage devices.

### BACKGROUND ART

Conventionally, there has been widely known an energy storage apparatus which includes energy storage devices and in which a conductive member is disposed on a path of a current flowing through a main circuit including the energy storage devices. Patent document 1 discloses a battery pack (energy storage apparatus) where assembled batteries each includes a plurality of battery cells (energy storage devices) are connected to each other by conductors (conductive members) each provided with a heat absorber. The conductor (the conductive member) provided with the heat absorber includes: a conductor body portion having a cylindrical shape; a pair of electric connecting portions formed by collapsing opening ends of the conductor body in a flat shape; and a heat absorber sealed in the conductor body. With such a configuration, the conductor provided with the heat absorber can suppress a temperature rise when an abnormal current is supplied to the battery pack.

### PRIOR ART DOCUMENT

### PATENT DOCUMENT

Patent Document 1: JP-A-2019-9090

### SUMMARY OF THE INVENTION

### PROBLEMS TO BE SOLVED BY THE INVENTION

The above-described conventional energy storage apparatus has a problem that the configuration for suppressing a temperature rise is complicated. In the energy storage apparatus disclosed in Patent Document 1, a conductive member (a conductor with a heat absorber) has the complicated configuration where the heat absorber is sealed in a conductor body portion having a cylindrical shape and opening ends of the conductive body portion are collapsed into flat shape.

The inventors of the present invention have made the present invention by focusing on the above-described problem from a novel viewpoint, and it is an object of the present invention to provide an energy storage apparatus where the temperature rise can be suppressed with a simple configuration.

### MEANS FOR SOLVING THE PROBLEMS

According to one aspect of the present invention, there is provided an energy storage apparatus that includes: an energy storage device; an electrical component disposed on a path of a current that flows through a main circuit including the energy storage device; a first conductive member including a first connecting portion that is electrically connected to the energy storage device; a second conductive member that is connected to the first conductive member and is electrically connected to the electrical component; and an outer case configured to house the energy storage device, the electrical component, the first conductive member, and the second conductive member, wherein at least one conductive member of the first conductive member and the second conductive member includes: a second connecting portion being a portion that overlaps with the other conductive member and is connected to the other conductive member in a state where the second connecting portion is in contact with the other conductive member; and an extension portion configured to extend from the second connecting portion in a direction away from the path of the current

### ADVANTAGES OF THE INVENTION

According to the energy storage apparatus of the present invention, a temperature rise can be suppressed with the simple configuration.

### BRIEF DESCRIPTION OF THE DRAWINGS

Fig. 1 is a perspective view illustrating an external appearance of an energy storage apparatus according to an embodiment.
Fig. 2 is an exploded perspective view of the energy storage apparatus according to the embodiment illustrating respective constituent elements when the energy storage apparatus is disassembled.
Fig. 3 is a perspective view illustrating the configuration of the energy storage device according to the embodiment.
Fig. 4 is a perspective view illustrating the configuration of a bus bar according to the embodiment.
Fig. 5 is a perspective view illustrating the configuration in a state where the bus bar and a relay terminal according to the embodiment are connected to each other.
Fig. 6 is a perspective view illustrating the configuration of a bus bar according to a modification 1 of the embodiment.
Fig. 7A is a side view illustrating the configuration of a first conductive member and a second conductive member according to a modification 2 of the embodiment.
Fig. 7B is a side view illustrating the configuration of a first conductive member and a second conductive member according to a modification 2 of the embodiment.
Fig. 8 is a side view illustrating the configuration where a second conductive member according to a modification 3 of the embodiment is connected to an electrical component.
Fig. 9 is a top plan view illustrating the configuration of an insulating member that surrounds a periphery of an extension portion according to a modification 4 of the embodiment.
Fig. 10 is a top plan view illustrating the configuration of a bus bar according to a modification 5 of the embodiment.

### MODE FOR CARRYING OUT THE INVENTION

According to one aspect of the present invention, there is provided an energy storage apparatus that includes: an energy storage device; an electrical component disposed on a path of a current that flows through a main circuit including the energy storage device; a first conductive member including a first connecting portion that is electrically connected to the energy storage device; a second conductive member that is connected to the first conductive member and is electrically connected to the electrical component; and an outer case configured to house the energy storage device, the electrical component, the first conductive member, and the second conductive member, wherein at least one conductive member of the first conductive member and the second conductive member includes: a second connecting portion being a portion that overlaps with the other conductive member and is connected to the other conductive member in a state where the second connecting portion is in contact with the other conductive member; and an extension portion configured to extend from the second connecting portion in a direction away from the path of the current.

With such a configuration, in the energy storage apparatus, at least one of the first conductive member and the second conductive member includes: the second connecting portion being the portion that overlaps with the other conductive member and is connected to the other conductive member in a state where the second connecting portion is in contact with the other conductive member; and the extension portion configured to extend from the second connecting portion in the direction away from the path of the current. In this manner, the extension portion is formed by forming the portion that extends from the second connecting portion on at least one of the first conductive member and the second conductive member. Accordingly, the extension portion can be easily formed. With this configuration, even when an excessively large current flows at the time of the occurrence of abnormality or the like, heat is stored in the extension portion. Accordingly, the generation of heat in the conductive members (the first conductive member and the second conductive member) is suppressed and hence, a temperature rise of the conductive members can be suppressed. Accordingly, in the energy storage apparatus, a temperature rise can be suppressed with the simple configuration.

The electrical component, at least a portion of the first conductive member, and at least a portion of the second conductive member may be disposed between an outer surface of the energy storage device and an inner surface of the outer case that face each other.

With such a configuration, even when there is an electrical component that generates heat in a relatively narrow space formed between the outer surface of the energy storage device and the inner surface of the outer case, a temperature rise of the conductive member (the first conductive member and the second conductive member) can be suppressed by the extension portion.

The first conductive member may have a raised portion that is positioned between the first connecting portion and the second connecting portion and extends in a direction away from the energy storage device.

With such a configuration, the first conductive member includes the raised portion that extends in the direction away from the energy storage device and hence, the extension portion can be spaced apart from the energy storage device. Accordingly, it is possible to suppress the occurrence of short-circuiting due to the contacting of the extension portion with the energy storage device.

The extension portion may have a larger cross-sectional area than the second connecting portion in a plane orthogonal to the extending direction of the extension portion.

In a case where heat is to be dissipated, it is preferable to increase a surface area of the extension portion. On the other hand, in a case where heat is to be stored, it is preferable to increase a volume of the extension portion. The volume of the extension portion can be increased by increasing a cross-sectional area of the extension portion. Therefore, the cross-sectional area of the extension portion is set larger than the cross-sectional area of the second connecting portion. With such a configuration, a larger amount of heat can be stored in the extension portion and hence, the generation of heat by the conductive member (the first conductive member and the second conductive member) can be further suppressed whereby a temperature rise of the conductive member can be suppressed more effectively. Accordingly, in the energy storage apparatus, a temperature rise can be suppressed with the simple configuration.

The extension portion may have a larger width than the second connecting portion in a direction orthogonal to the extending direction of the extension portion.

By increasing the width of the extension portion, the volume of the extension portion can be increased. Therefore, the width of the extension portion is set larger than the width of the second connecting portion. With such a configuration, a larger amount of heat can be stored in the extension portion and hence, the generation of heat by the conductive member (the first conductive member and the second conductive member) can be further suppressed whereby a temperature rise of the conductive member can be suppressed more effectively. Accordingly, in the energy storage apparatus, a temperature rise can be suppressed with the simple configuration.

The extension portion may have a larger volume than the second connecting portion.

In the case of accumulating heat, it is preferable to increase a volume of an object. Therefore, the volume of the extension portion is set larger than the volume of the second connecting portion. With such a configuration, a larger amount of heat can be stored in the extension portion and hence, the generation of heat by the conductive member (the first conductive member and the second conductive member) can be further suppressed whereby a temperature rise of the conductive member can be suppressed more effectively. Accordingly, in the energy storage apparatus, a temperature rise can be suppressed with the simple configuration.

The extension portion may have an insulating coating.

With such a configuration, the extension portion can be insulated by the insulating coating and hence, it is possible to suppress the occurrence of short-circuiting which occurs when the extension portion is brought into contact with the energy storage device or the like.

An insulating member that surrounds a periphery of the extension portion may be further provided.

With such a configuration, by surrounding the periphery of the extension portion with the insulating member, it is possible to suppress the occurrence of short-circuiting due to the contacting of the extension portion with the energy storage device or the like.

Hereinafter, the energy storage apparatus according to the embodiment (including modifications of the embodiment) of the present invention is described with reference to the drawings. All embodiments described hereinafter are comprehensive examples or specific examples. Numerical values, shapes, materials, cs, the arrangement positions and the connection modes of the constitutional elements, manufacturing steps, the order of the manufacturing steps, and the like in the embodiment described hereinafter are provided as an example, and they are not intended to limit the scope of the present invention. In the respective drawings, sizes and the like are not strictly illustrated. In the respective drawings, identical or substantially identical constitutional elements are given the same symbols.

In the following description and drawings, the arrangement direction along which a plurality of energy storage devices is arranged, the direction that long-side surfaces of cases of the energy storage devices face each other, the arrangement direction along which the energy storage devices and spacers are arranged, or the arrangement direction of a pair of end plates is defined as an X-axis direction. The arrangement direction along which a pair of electrode terminals (the electrode terminal on a positive side and the electrode terminal on a negative side) are arranged in one energy storage device, the direction along which short-side surfaces of the cases of the energy storage devices face each other, or the arrangement direction along which a pair of side plates is arranged is defined as a Y-axis direction. The arrangement direction along which an outer case body and an outer case lid of the energy storage apparatus are arranged, the arrangement direction along which a case body and a case lid of the energy storage device are arranged, the arrangement direction along which the energy storage devices and bus bars are arranged, the arrangement direction along which the energy storage devices and a bus bar frame are arranged, or the vertical direction is defined as a Z-axis direction. These X-axis direction, Y-axis direction, and Z-axis direction are the directions that intersect with each other (orthogonal to each other in the embodiment). A case is also considered where the Z-axis direction is not the vertical direction depending on a use mode. However, in the description made hereinafter, for the sake of convenience of the description, the description is made by assuming the Z-axis direction as the vertical direction.

In the description made hereinafter, an X-axis plus direction indicates an arrow direction of the X-axis, and an X-axis minus direction indicates a direction opposite to the X-axis plus direction. In a case where the direction is simply referred to as the X-axis direction, the X-axis direction indicates both or either one of the X-axis plus direction or the X-axis minus direction. The same goes for the Y-axis direction and the Z-axis direction. In the following description, there may be a case where the Z-axis direction is referred to as a first direction, the X-axis direction is referred to as a second direction, and the Y-axis direction is referred to as a third direction. Expressions indicating the relative directions or the relative postures such as "parallel" or "orthogonal" also include cases where such directions or postures are not considered as such directions or such postures in a strict meaning of the terms. A state where two directions are orthogonal to each other means not only a state where these two directions are completely orthogonal to each other but also a state where these two directions are substantially orthogonal to each other, that is, for example, a state where these two directions are substantially orthogonal to each other with slight deviation of approximately several percent. In the following description, the expression "insulation" means "electrical insulation".

### (Embodiment)

### [1 Overall description of energy storage apparatus 10]

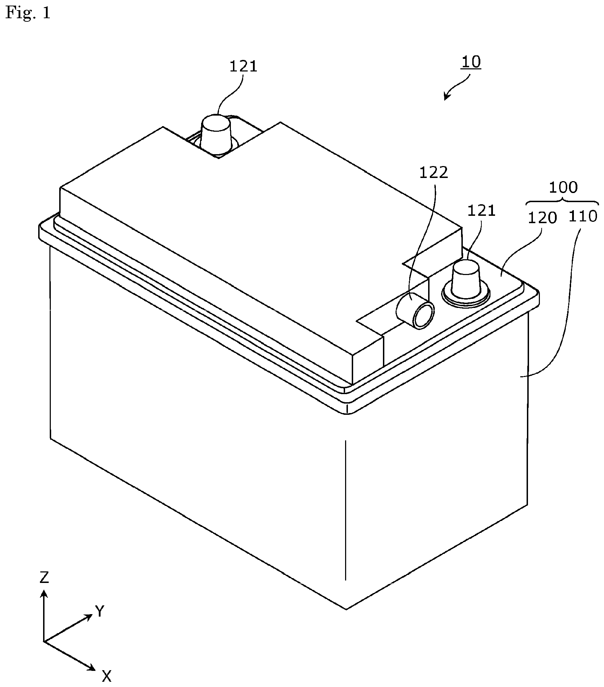

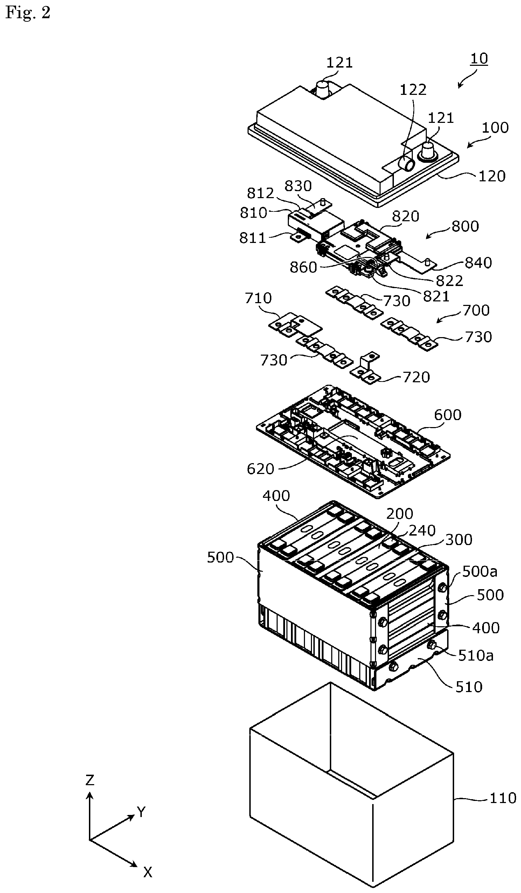

First, the overall description of the energy storage apparatus 10 according to the embodiment will be made. Fig. 1 is a perspective view illustrating an external appearance of the energy storage apparatus 10 according to the embodiment. Fig. 2 is an exploded perspective view of the energy storage apparatus 10 according to the embodiment illustrating respective constitutional elements when the energy storage apparatus 10 is disassembled.

The energy storage apparatus 10 is an apparatus in which electricity is charged from the outside and from which electricity is discharged to the outside. In the embodiment, the energy storage apparatus 10 has an approximately rectangular parallelepiped shape. The energy storage apparatus 10 is a battery module (assembled battery) used in an electricity storage application, a power source application, or the like. To be more specific, the energy storage apparatus 10 is used as a battery or the like for driving a mobile body such as an automobile, a motorcycle, a watercraft, a ship, a snowmobile, an agriculture machine, a construction machine, or a railway vehicle for an electric railway, or is used as a battery for starting an engine of the mobile body. As the above-described automobile, an electric vehicle (EV), a hybrid electric vehicle (HEV), a plug-in hybrid electric vehicle (PHEV), and a gasoline automobile are exemplified. As an example of the railway vehicle for an electric railway, a train, a monorail, a linear motor car, and a hybrid train including both a diesel engine and an electric motor are exemplified. The energy storage apparatus 10 can also be used as a stationary battery or the like used as a home-use battery, a business use battery, or the like.

As illustrated in Fig. 1, the energy storage apparatus 10 includes an outer case 100. As illustrated in Fig. 2, a plurality of energy storage devices 200, a plurality of spacers 300, a pair of end plates 400, a pair of side plates 500, a bottom plate 510, a bus bar frame 600, a plurality of bus bars 700 (710 to 730), electric equipment 800 and the like are housed in the outer case 100. In addition to the above-described components, the energy storage apparatus 10 may include connectors that connect the electric equipment 800 and the outside to each other, and the like.

The outer case 100 is a case (a module case) having a box shape (an approximately rectangular parallelepiped shape) that forms a housing (an outer shell) of the energy storage apparatus 10. That is, the outer case 100 is disposed outward a plurality of energy storage devices 200 and the like, fixes the plurality of energy storage devices 200 and the like at predetermined positions, and protects the energy storage devices 200 and the like from an impact or the like. The outer case 100 is made of an insulating material such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene/perfluoroalkyl vinyl ether (PFA), polytetrafluoroethylene (PTFE), polyether sulfone (PES), an ABS resin, or a composite material of the above-described materials, or metal or the like to which insulation coating is applied. With such a configuration, the outer case 100 prevents the energy storage devices 200 and the like from coming into contact with metal members or the like outside the outer case 100. Provided that the electric insulation property of the energy storage devices 200 and the like is ensured, the outer case 100 may be formed using a conductive material such as metal or the like.

The outer case 100 includes: an outer case body 110 that forms a body of the outer case 100; and an outer case lid 120 that forms a lid of the outer case 100. The outer case body 110 is a housing (casing) having a bottomed rectangular cylindrical shape having an opening, and houses the energy storage devices 200 and the like. The outer case lid 120 is a flat rectangular member that closes the opening of the outer case body 110. The outer case lid 120 is joined to the outer case body 110 by an adhesive, heat sealing, ultrasonic welding or the like. As a result, the outer case 100 has a structure where the inside of the outer case 100 is sealed (hermetically sealed). A pair of external terminals (an external terminal on a positive side and an external terminal on a negative side) 121 are mounted on the outer case lid 120. The energy storage apparatus 10 stores electricity from the outside and discharges electricity to the outside through the pair of external terminals 121.

A gas discharge portion 122 is formed on the outer case lid 120. The gas discharge portion 122 is a tubular (cylindrical) portion having a gas discharge port. A gas discharged from a gas release valve 231 of the energy storage device 200 described later is discharged outward the outer case 100 through the gas discharge portion 122. In the outer case lid 120, a ventilation waterproof membrane (not illustrated) is mounted on (attached to) an inner surface of a wall of a space that is communicably connected to the gas discharge portion 122. As described above, the outer case 100 has only one gas discharge port and the ventilation waterproof membrane is also disposed in the outer case 100 and hence, the outer case 100 has the structure where heat is liable to be accumulated.

The energy storage device 200 is a secondary battery (a battery cell) that can store electricity or discharge electricity. To be more specific, the energy storage device 200 is a nonaqueous electrolyte secondary battery such as a lithium ion secondary battery. The energy storage device 200 has a flat rectangular parallelepiped shape (prismatic shape). In this embodiment, eight pieces of energy storage devices 200 are arranged side by side in the X-axis direction. The size and the shape of the energy storage devices 200, the number of the energy storage devices 200 arranged side by side, and the like are not limited. For example, only one energy storage device 200 may be arranged. The energy storage device 200 is not limited to a nonaqueous electrolyte secondary battery. The energy storage device 200 may be a secondary battery other than the non-aqueous electrolyte secondary battery, or may be a capacitor. The energy storage device 200 is not necessarily a secondary battery, and may be a primary battery that allows a user to use stored electricity even when the user does not charge the battery. The energy storage device 200 may be a battery that uses a solid electrolyte. The energy storage device 200 may be a pouch-type energy storage device. The detailed configuration of the energy storage device 200 is described later.

The spacer 300 is a member having a plate-plate shape and a rectangular shape and that is disposed on a side (in the X-axis plus direction or in the X-axis minus direction) of the energy storage device 200. The spacer 300 is disposed for providing an electrical insulation between the energy storage device 200 and the other member. To be more specific, the spacer 300 is disposed between two energy storage devices 200 disposed adjacently to each other, and between the energy storage devices 200 at end portions and end plates 400. The spacer 300 provides insulation between these two energy storage devices 200 and between the energy storage device 200 at the end portion of the energy storage device 200 and the end plate 400. In the embodiment, the spacer 300 is not disposed between two energy storage devices 200 connected in parallel. However, the arrangement positions, the number of spacers 300 and the like relating to the spacers 300 are not particularly limited. The spacer 300 is made of a material having an insulating property such as any resin material that can be used as a material of the outer case 100, or a material having a heat insulating property such as a dammer material.

The end plates 400, the side plates 500, and the bottom plate 510 are binding members that press (bind) the plurality of energy storage devices 200 and the plurality of spacers 300 from the outside in the arrangement direction (the X-axis direction) of the plurality of energy storage devices 200 and the plurality of spacers 300. That is, the end plates 400, the side plates 500 and the bottom plate 510 press (bind) each of the plurality of respective energy storage devices 200 and the like by sandwiching the plurality of energy storage devices 200 from both sides in the X-axis direction. The end plates 400, the side plates 500, and the bottom plate 510 are made of metal materials such as steel or stainless steel from the viewpoint of securing strengths of these components and the like. However, the materials of these components are not particularly limited, and the components may be made of an insulating material having high strength, or a metal material to which insulation treatment is applied.

The bus bar frame 600 is a flat rectangular member capable of providing electrical insulation between the bus bars 700, the electric equipment 800 and other members from each other. The bus bar frame 600 is also capable of restricting the positions of the bus bars 700, the electric equipment 800 and the like. To be more specific, the bus bars 700, the electric equipment 800 and the like are mounted and are positioned on the bus bar frame 600. The bus bar frame 600 is mounted over the plurality of energy storage devices 200, and is positioned with respect to the plurality of energy storage devices 200. With such a configuration, the bus bars 700 are positioned with respect to the plurality of energy storage devices 200. The bus bar frame 600 includes a gas discharge duct 620 that extends in the X-axis direction at a center portion in the Y-axis direction. When a gas is discharged from the gas release valve 231 of the energy storage device 200, the gas having a high temperature passes through the gas discharge duct 620. Accordingly, it is possible to prevent the high-temperature gas from directly hitting the bus bars 700 and the like and hence, the transfer of heat to the bus bars 700 and the like can be suppressed. The gas discharge duct 620 may be a duct separate from the bus bar frame 600. The bus bar frame 600 is made of a material having insulating property such as any resin material that can be used as a material of the above-described outer case 100.

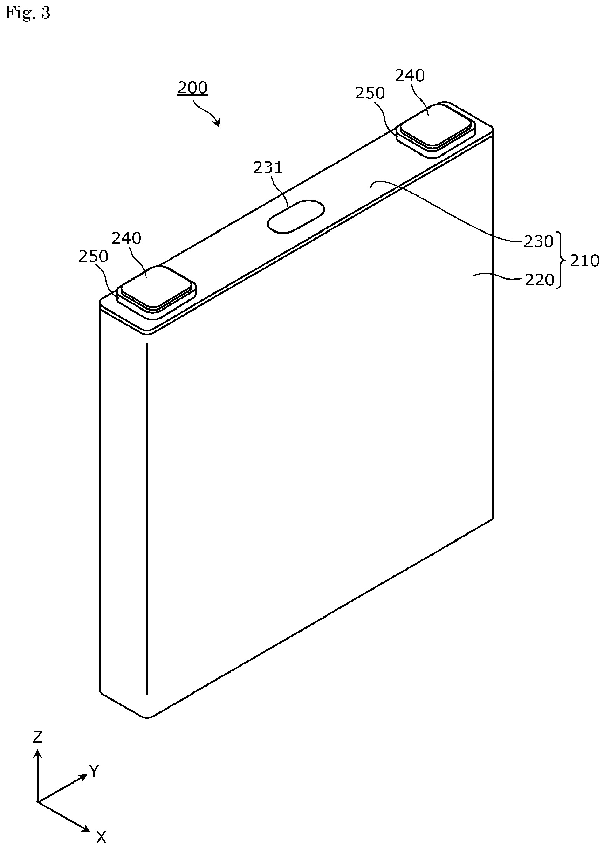

The bus bars 700 are plate-shaped members that are connected to the energy storage devices 200. The bus bars 700 are disposed above the plurality of energy storage devices 200, and are connected (joined) to the electrode terminals 240 (See Fig. 2 and Fig. 3 and the like) of the plurality of energy storage devices 200 and the electric equipment 800. That is, the bus bars 700 connect the electrode terminals 240 of the plurality of energy storage devices 200 to each other, and, connect the electrode terminals 240 of the energy storage devices 200 at the end portions to the electric equipment 800. With such a configuration, the bus bars 700 electrically connect the plurality of energy storage devices 200 and the external terminals 121 to each other. In the embodiment, the bus bars 700 and electrode terminals 240 are connected (joined) to each other by welding, and the bus bars 700 and the electric equipment 800 are connected (joined) to each other by bolt fastening. However, such a connection mode is not particularly limited. The bus bars 700 are formed of a conductive member made of metal such as aluminum, an aluminum alloy, copper, a copper alloy, nickel, a conductive member made of the combination of these materials, or a conductive member made of a material other than metal.

To be more specific, the bus bars 700 include bus bars 710, 720, and 730. In the embodiment, four sets of energy storage device groups are formed by arranging each two energy storage devices 200 side by side, and the bus bars 730 connect four sets of energy storage device groups in series. To be more specific, the bus bars 730 are connected to the electrode terminals 240 (that is, four electrode terminals 240) of the energy storage devices 200 in two sets of energy storage device groups disposed adjacently to each other. The bus bar 710 is connected to the electrode terminal 240 of the energy storage device 200 disposed at the end portion in the X-axis minus direction, and is connected to the external terminal 121 in the X-axis minus direction through the electric equipment 800. To be more specific, the bus bar 710 is connected to a relay terminal 811 described later of the electric equipment 800, and electrically connects the electrode terminals 240 of the energy storage devices 200 and the external terminal 121 to each other. The bus bar 720 is connected to the electrode terminals 240 of the energy storage devices 200 disposed at the end portions in the X-axis plus direction, and is connected to the external terminal 121 in the X-axis plus direction through the electric equipment 800. To be more specific, the bus bar 720 is connected to a shunt resistor terminal 821 described later of the electric equipment 800, and electrically connects the electrode terminals 240 of the energy storage devices 200 and the external terminal 121 to each other.

The connection mode of the bus bars 700 is not particularly limited. The plurality of energy storage devices 200 may be connected in series or in parallel in any combination, or all energy storage devices 200 may be connected in series or in parallel.

The electric equipment 800 is an electrical component mounted on the bus bar frame 600, and is connected to the bus bars 700 so as to electrically connect the energy storage devices 200 and the external terminals 121 to each other. The electric equipment 800 includes a relay 810, a board unit 820, and bus bars 830 and 840. The electric equipment 800 may include an electrical component such as a fuse in addition to the above-described configuration.

The relay 810 is an electrical component that turns on and off the flow of a current flowing to the energy storage devices 200 (a current flowing through a main circuit). The electrical component is a switch component (a relay, an FET or the like) that turns on and off a path of a current of the main circuit, or a measurement component (a shunt resistor) related to the main circuit or the like. The electrical component is a component that generates heat mainly by Joule heating, and is a component where it is desirable to suppress a temperature rise of the component by heat. The relay 810 is a heating element that is disposed on a path of a current flowing through a main circuit including the energy storage devices 200, and generates heat when an excessively large current flows at the time of the occurrence of abnormality or the like. Relay terminals 811 and 812 are connected to the relay 810. The relay terminal 811 is a terminal having a flat and rectangular shape that is connected to the bus bar 710. The relay terminal 812 is a terminal having a flat and rectangular shape that is connected to the bus bar 830. The arrangement positions, the sizes, the shapes, and the like of the relay terminals 811 and 812 are not particularly limited. The relay terminals 811 and 812 are each made of a conductive material such as any metal or the like that can be also used as a material of the above-described bus bars 700 (710 to 730).

The board unit 820 is a device capable of performing monitoring a state such as a charge state, a discharge state, a voltage, and a temperature of the energy storage device 200, a control of charge and discharge of the energy storage device 200, a control of the relay 810, and communication with the outside, and the like. The board unit 820 includes a circuit board, connectors, and the like therein. The board unit 820 includes a shunt resistor 860, and shunt resistor terminals 821 and 822. The shunt resistor 860 is an electrical component that is disposed as a portion of a path of a current of the main circuit, and measures a current value of a current flowing through the main circuit. The shunt resistor 860 is an electrical component where a resistor that forms a shunt resistor is disposed at a central portion, and the shunt resistor terminals 821 and 822 are disposed at both ends of the resistor. The shunt resistor 860 further includes a detection terminal (not illustrated in the drawings), and is connected to a circuit board in the board unit 820. The shunt resistor terminal 821 is a terminal having a flat and rectangular shape that is connected to the bus bar 720. The shunt resistor terminal 822 is a terminal having a flat and rectangular shape that is connected to the bus bar 840. The arrangement positions, the sizes, the shapes, and the like of the shunt resistor terminals 821 and 822 are not particularly limited. The shunt resistor terminals 821 and 822 are made of a conductive material suitable for the forming the shunt resistor 860 such as any metal or the like that can be used as a material for forming the above-described bus bars 700 (710 to 730).

The bus bar 830 is a plate-like member that is connected to the relay terminal 812 and the external terminal 121 in the X-axis minus direction. The bus bar 830 provides the electric connection between the relay 810 and the external terminal 121. The bus bar 840 is a plate-like member that is connected to the shunt resistor terminal 822 and the external terminal 121 in the X-axis plus direction. The bus bar 840 provides the electric connection between the shunt resistor 860 and the external terminal 121. The bus bars 830 and 840 are each made of a conductive material such as any metal or the like that can be also used as a material of the above-described bus bars 700 (710 to 730).

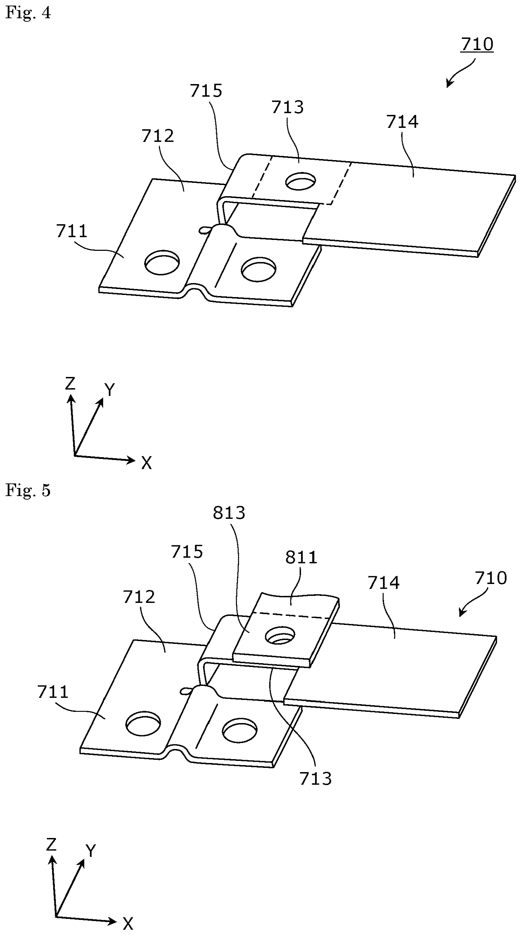

As described above, the bus bars 700 (710 to 730), the relay terminals 811 and 812, the shunt resistor terminals 821 and 822, and the bus bars 830 and 840 are conductive members that are disposed on a path of a current flowing through the main circuit including the energy storage devices 200 (a current flowing through the electrode assemblies of the energy storage devices 200). A current flows through these conductive members. In the embodiment, the bus bar 710 is an example of a first conductive member, and the relay terminal 811 is an example of a second conductive member that is electrically connected to the electrical component (the relay 810). That is, the bus bar 710 and the relay terminal 811 are the first conductive member and the second conductive member that are disposed on a path of a current flowing through the main circuit including the energy storage device 200, and are connected to each other. The electrical component (the relay 810), at least a portion of the first conductive member (the bus bar 710), and at least a portion of the second conductive member (the relay terminal 811) are disposed between outer surfaces of the energy storage devices 200 (upper surfaces of container lids 230 described later) and an inner surface of the outer case 100 (a lower surface of the outer case lid 120) that face each other. It may be also allowed to consider that the terminal of the relay 810 corresponds to the second conductive member. That is, it may be also allowed to consider that the relay 810 includes the electrical component and the second conductive member. A switch member that forms an electrical component is disposed in the case of the relay 810, and some of terminals that are connected to the switch member are led out from the case as the relay terminals 811 and 812. The relay terminal 811 includes a third connecting portion 813 (see Fig. 5) that is connected to a second connecting portion 713 of the bus bar 710 described later. The configurations of the third connecting portion 813 and the bus bar 710 (first conductive member) will be described in detail later.

### [2 Description of energy storage device 200]

Next, the configuration of the energy storage device 200 is described in detail. Fig. 3 is a perspective view illustrating the configuration of the energy storage device 200 according to the embodiment. To be more specific, Fig. 3 illustrates, in an enlarged manner, an external appearance of one energy storage device 200 out of the plurality of energy storage devices 200 illustrated in Fig. 2. All of the plurality of energy storage devices 200 have substantially the same configuration. Accordingly, the configuration of one energy storage device 200 will be described in detail below.

As illustrated in Fig. 3, the energy storage device 200 includes: a case 210; a pair of electrode terminals 240 (the electrode terminal 240 on a positive side and the electrode terminal 240 on a negative side), and an upper gasket 250. In the case 210, a lower gasket, an electrode assembly, a pair of current collectors (the current collector on a positive side and the current collector on a negative side), an electrolyte solution (a nonaqueous electrolyte), and the like are accommodated. However, these components are not illustrated in the drawing. A kind of the electrolyte solution is not particularly limited provided that the performance of the energy storage device 200 is not impaired, and various kinds of electrolyte solutions can be selected.

The energy storage device 200 may further include, besides the components described above, spacers that are disposed on the sides of the electrode assembly or below the electrode assembly, an insulating film that wraps the electrode assembly and the like, and the like. An insulating film (such as a shrink tube) that covers an outer surface of the case 210 may be disposed surrounding a periphery of the case 210. The material of the insulating film is not particularly limited provided that insulating property required for the energy storage device 200 can be secured. As such a material, a resin having insulating property such as PC, PP, PE, PPS, PET, PBT and an ABS resin, an epoxy resin, Kapton, Teflon (registered trademark), silicon, polyisoprene and polyvinyl chloride and the like are exemplified.

The case 210 is a case having a rectangular parallelepiped shape (a prismatic shape or a box shape). The case 210 includes: a case body 220 that has an opening; and a case lid 230 that closes the opening of the case body 220. The case body 220 is a member that forms the body portion of the case 210, and has a rectangular cylindrical shape and a bottom. The opening is formed on an end of the case body 220 on a plus side in the Z-axis direction. The case lid 230 is a plate-shaped member having a rectangular shape that forms a lid portion of the case 210. The case lid 230 is disposed on the case body 220 on a plus side in the Z-axis direction, and extends in the Y-axis direction. On the case lid 230, a gas release valve 231 that releases a pressure in the case 210 when such a pressure becomes excessively large, a solution filling portion (not illustrated in the drawings) through which the case 210 is filled with an electrolyte solution, and the like are mounted. The case 210 has the structure where the inside of the case 210 is sealed. Such sealed structure is obtained by housing the electrode assembly and the like in the case body 220 and, thereafter, by joining the case body 220 and the case lid 230 to each other by welding or the like. The case 210 has: a pair of long side surfaces on side surfaces of the case 210 on both sides in the X-axis direction; a pair of short side surfaces on side surfaces of the case 210 on both sides in the Y-axis direction; and a bottom surface on a minus side in the Z-axis direction. The material of the case 210 (the case body 220 and the case lid 230) is not particularly limited. For example, the case 210 may be made of metal that is weldable (joinable) such as stainless steel, aluminum, an aluminum alloy, iron, or a plated steel plate. A resin can be also used as the material of the case 210.

The electrode terminals 240 are terminal members (a positive terminal and a negative terminal) of the energy storage device 200 disposed on the case lid 230. The electrode terminals 240 are electrically connected to a positive plate and a negative plate of the electrode assembly via the current collectors. That is, the electrode terminals 240 are members made of metal that are provided for discharging electricity stored in the electrode assembly to a space outside the energy storage device 200, and for charging electricity into an internal space in the energy storage device 200 so as to store the electricity in the electrode assembly. The electrode terminals 240 are made of aluminum, an aluminum alloy, copper, a copper alloy, or the like.

The electrode assembly is an energy storage element (power generating element) formed by stacking a positive plate, a negative plate, and a separator to each other. The positive plate is formed such that a positive active material layer is formed on a positive substrate layer that is a current collecting foil made of metal such as aluminum or an aluminum alloy. The negative plate is formed such that a negative active material layer is formed on a negative substrate layer that is a current collecting foil made of metal such as copper or a copper alloy. As an active material used for forming the positive active material layer and an active material used for forming the negative active material layer, known materials can be appropriately used provided that these materials can occlude and discharge lithium ions. As the separator, a microporous sheet, nonwoven fabric or the like made of a resin can be used. In the embodiment, the electrode assembly is formed by stacking plates (positive plates and negative plates) in the X-axis direction. The electrode assembly may be an electrode assembly in any form such as a winding-type electrode assembly formed by winding plates (a positive plate and a negative plate), a layered-type (stacking-type) electrode assembly formed by stacking a plurality of flat-plate-shaped plates, or a bellows-type electrode assembly formed by folding plates in a bellows shape.

The current collectors (the positive electrode current collector and the negative electrode current collector) are members having conductivity and are electrically connected to the electrode terminals 240 and the electrode assembly. The positive electrode current collector is made of aluminum, an aluminum alloy or the like substantially in the same manner as the positive substrate layer of the positive plate. The negative electrode current collector is made of copper, a copper alloy, or the like substantially in the same manner as the negative substrate layer of the negative plate. An upper gasket 250 is a gasket that is disposed between the case lid 230 and the electrode terminal 240. The upper gasket 250 and provides insulation and sealing between the case lid 230 and the electrode terminals 240. A lower gasket is a gasket that is disposed between the case lid 230 and the current collector. The lower gasket provides insulation and sealing between the case lid 230 and the current collector. The upper gasket 250 and the lower gasket may be formed of any material provided that these gaskets have insulating property.

### [3 Description of bus bar 710 (first conductive member)]

Next, the configuration of the bus bar 710 (first conductive member) will be described in detail. Fig. 4 is a perspective view illustrating the configuration of the bus bar 710 according to the embodiment. Fig. 5 is a perspective view illustrating the configuration in a state where the bus bar 710 and the relay terminal 811 according to the embodiment are connected to each other. In Fig. 5, for the sake of convenience of the description, the illustration of connection members (bolts, nuts, and the like) for connecting the bus bar 710 and the relay terminal 811 is omitted.

As illustrated in these drawings, the bus bar 710 (first conductive member) includes a first connecting portion 711, an intermediate portion 712, a second connecting portion 713, an extension portion 714, and a raised portion 715. The relay terminal 811 includes a third connecting portion 813 that is connected to the second connecting portion 713. The third connecting portion 813 is a portion of the relay terminal 811 that is brought into contact with the second connecting portion 713 (a portion that overlaps with the second connecting portion 713 as viewed in the Z-axis direction).

The first connecting portion 711 is a flat plate-like and rectangular portion that is electrically connected (joined) to two electrode terminals 240 of the same polarity that two energy storage devices 200 connected in parallel have. The intermediate portion 712 is a plate-like portion disposed between the first connecting portion 711 and the second connecting portion 713. To be more specific, the intermediate portion 712 is connected to an end edge in the Y-axis plus direction of an end portion of the first connecting portion 711 in the X-axis minus direction and an end edge of the second connecting portion 713 in the X-axis minus direction. More specifically, the intermediate portion 712 extends in the Y-axis plus direction from the end edge in a Y axis plus direction of the end portion of the first connecting portion 711 in an X axis minus direction, extends in the X-axis plus direction, is bent in the X-axis plus direction after being bent in the Z-axis plus direction, and is connected to the end edge of the second connecting portion 713 in an X-axis minus direction. A flat plate-like portion of the intermediate portion 712 disposed parallel to a YZ plane extending in the Z-axis plus direction is also referred to as the raised portion 715. The raised portion 715 is a portion that is positioned between the first connecting portion 711 and the second connecting portion 713, and extends in the direction away from the energy storage device 200 (in the Z axis plus direction).

The second connecting portion 713 is a flat plate-shaped rectangular portion connected (joined) to the relay terminal 811 (the second conductive member). The second connecting portion 713 is a portion that overlaps with the relay terminal 811 (the second conductive member) as viewed in the Z-axis direction (the first direction), and is connected to the relay terminal 811 in a state where the second connecting portion 713 is in contact with the relay terminal 811 (the second conductive member) in the Z-axis direction (the first direction) (see Fig. 5). That is, the second connecting portion 713 is a portion of the bus bar 710 that is brought into contact with the relay terminal 811 (the third connecting portion 813). In other words, the second connecting portion 713 is a portion where a current flows between the bus bar 710 and the relay terminal 811. A surface of the second connecting portion 713 in the Z-axis direction and a surface of the third connecting portion 813 of the relay terminal 811 in the Z-axis minus direction are brought into contact with each other, and a current flows between these contact surfaces. A circular through hole is formed in each of the second connecting portion 713 and the third connecting portion 813. A connecting member (such as a bolt) for connecting the bus bar 710 and the relay terminal 811 to each other is inserted into these through holes. The second connecting portion 713 and the third connecting portion 813 can be defined as portions having shapes for connection such as these through holes. In a case where the bus bar 710 and the relay terminal 811 are connected to each other by welding or the like, the through holes may not be formed.

The extension portion 714 is a portion (a heat storage portion) that extends from the second connecting portion 713 in the X-axis direction (the second direction that intersects with the first direction) and in a direction away from a path of a current that flows through the main circuit, and is capable of accumulating heat. A current flows between the intermediate portion 712 and the second connecting portion 713. Accordingly, the "direction away from a path of a current (a current that flows through the main circuit including the energy storage device 200)" is a direction different from the direction directed from the second connecting portion 713 toward the intermediate portion 712 (the X-axis minus direction). To be more specific, the extension portion 714 is a flat-plate-like rectangular-shaped portion that is connected to an end edge of the second connecting portion 713 in the X axis plus direction, and extends in the X axis plus direction (in the direction away from a path of a current) from the end edge of the second connecting portion 713 in the X-axis plus direction. In the embodiment, the portion positioned at the end portion of the extension portion 714 in the X-axis minus direction and on the Y-axis minus direction side extends in the Y-axis minus direction (in the direction away from a path of a current) from the end edge in the Y-axis minus direction of the end portion of the second connecting portion 713 in the X-axis plus direction. The extension portion 714 is not limited to a flat plate shape, and a portion or the entirety of the extension portion 714 may be bent, or may have a corrugated plate shape or the like. By bending a portion or the entirety of the extension portion 714, the extension portion 714 can avoid the interference with other components in the vicinity of the extension portion 714, or the extension portion 714 can be disposed in a direction toward a position where a space exists. In forming the extension portion 714 in a corrugated plate shape, the extension portion 714 can be manufactured by sheet metal working and hence, the area and the volume of the extension portion 714 can be easily increased.

The extension portion 714 has a larger width in the Y-axis direction (the third direction that intersects with the first direction and the second direction) than the second connecting portion 713. In a case where the width of the second connecting portion 713 in the Y-axis direction is not constant, the width of the extension portion 714 in the Y-axis direction is set larger than an average value of the width of the second connecting portion 713 in the Y-axis direction. As described above, the width of the extension portion 714 is larger than the width of the second connecting portion 713 in the direction orthogonal to the extending direction (X-axis direction) of the extension portion 714 (the Y-axis direction in the embodiment). The extension portion 714 has a larger length than the second connecting portion 713 in the X-axis direction (the second direction). In a case where the length of the second connecting portion 713 in the X-axis direction is not constant, the length of the extension portion 714 in the X-axis direction is set larger than an average value of the length of the second connecting portion 713 in the X-axis direction. The extension portion 714 has the same thickness as the second connecting portion 713 in the Z-axis direction.

Accordingly, the extension portion 714 has a larger cross-sectional area than the second connecting portion 713 with respect to a plane orthogonal to the X-axis direction (the second direction) that is the extending direction of the extension portion 714 (a plane parallel to the YZ plane). The extension portion 714 has a larger volume than the second connecting portion 713. That is, the extension portion 714 extends in the X-axis direction as well as in the Y-axis direction so as to have a larger volume than the second connecting portion 713. The extension portion 714 has the width approximately 1.5 to 2 times as large as the width of the second connecting portion 713 in the Y-axis direction, and has the length approximately 2 to 3 times as large as the length of the second connecting portion 713 in the X-axis direction. With such a configuration, when the second connecting portion 713 generates heat, the extension portion 714 can store the heat of the second connecting portion 713.

### [4 Description of advantageous effects]

As has been described above, according to the energy storage apparatus 10 of the embodiment of the present invention, the bus bar 710 (first conductive member) on the path of a current flowing through the main circuit has the extension portion 714 that extends from the second connecting portion 713 connected to the relay terminal 811 in the state that the bus bar 710 is in contact with the relay terminal 811 (second conductive member) in the direction away from the path of the current. In this manner, the extension portion 714 is formed by forming the portion that extends from the second connecting portion 713 that is connected to the relay terminal 811 on the bus bar 710. Accordingly, the extension portion 714 can be easily formed. With such a configuration, even when an excessively large current flows at the time of the occurrence of abnormality or the like, heat is stored in the extension portion 714. Accordingly, the generation of heat in the conductive members (the bus bar 710 and the relay terminal 811) is suppressed and hence, a temperature rise of the conductive member can be suppressed. In particular, the energy storage apparatus 10 is sealed (hermetically sealed) by the outer case 100 and hence, the effect of suppressing a temperature rise of the conductive member is higher by accumulating heat than dissipating heat. Accordingly, in the energy storage apparatus 10, a temperature rise can be suppressed with the simple configuration. By suppressing a temperature rise of the conductive member, it is possible to prevent the equipment in the energy storage apparatus 10 from being damaged by heat generated in the conductive member. That is, in order to ensure a normal operation of the electrical component, a temperature rise of the conductive member connected to the electrical component is suppressed. By forming the portion extending from the second connecting portion 713 as the extension portion 714, restrictions on the layout at the time of forming the extension portion 714 can be reduced and hence, the degree of freedom of the layout can be increased. As in the case of the embodiment, the extension portion 714 is preferably disposed near the relay 810 (electrical component).

Specifically, in order to properly operate the electrical component, it is necessary to prevent a temperature of the electrical component from going beyond an operating temperature range. In particular, with respect to a high temperature side of the temperature range, it is necessary to suppress a temperature rise generated by Joule heating or the like at the time of supplying electricity to the electrical component. That is, it is necessary to suppress a temperature rise of the conductive member that is connected to the electrical component. For this end, by suppressing a temperature rise of the conductive member that is connected to the electrical component, it is possible to normally operate the electrical component. Further, the energy storage device 200 can discharge or charge a large current, and generates heat at the time of discharging or charging the large current. To cope with such a phenomenon, the extension portion 714 is provided to the conductive member (the first conductive member or the second conductive member) through which a large current flows. With such a configuration, an influence of heat on the electrical component brought about by the generation of heat can be reduced.

Even in a case where an electrical component (the relay 810 or the like) that generates heat is disposed in a relatively narrow space formed between an outer surface of the energy storage device 200 and an inner surface of the outer case 100, a temperature rise of the conductive member (the bus bar 710 and the relay terminal 811) can be suppressed by the extension portion 714.

The bus bar 710 includes the raised portion 715 extending in the direction away from the energy storage device 200 and hence, the extension portion 714 can be spaced apart from the energy storage device 200. Accordingly, it is possible to suppress the occurrence of short-circuiting due to the contacting of the extension portion 714 with the energy storage device 200.

In a case where heat is to be dissipated, it is preferable to increase a surface area of an object (including a case where a volume of the object being increased as a result of the increase of the surface area). On the other hand, in a case where heat is to be stored, it is preferable to increase the volume of the object. The volume of the extension portion 714 can be increased by increasing a cross-sectional area of the extension portion 714. The heat capacity is increases as the volume of the extension portion 714 increased and hence, the extension portion 714 can store a larger amount of heat. Therefore, a cross-sectional area of the extension portion 714 is set larger than a cross-sectional area of the second connecting portion 713. With such a configuration, a larger amount of heat can be stored in the extension portion 714 and hence, the generation of heat by the conductive members (the bus bar 710 and the relay terminal 811) can be suppressed whereby a temperature rise of the conductive member can be suppressed more effectively. Accordingly, in the energy storage apparatus 10, a temperature rise can be suppressed with the simple configuration.

The volume of the extension portion 714 can be increased by increasing the width of the extension portion 714. Accordingly, the width of the extension portion 714 is set larger than the width of the second connecting portion 713. With such a configuration, a larger amount of heat can be stored in the extension portion 714 and hence, the generation of heat by the conductive members (the bus bar 710 and the relay terminal 811) can be suppressed whereby a temperature rise of the conductive member can be suppressed more effectively. Accordingly, in the energy storage apparatus 10, a temperature rise can be suppressed with the simple configuration.

In the case of accumulating heat, it is preferable to increase the volume of an object. Accordingly, the volume of the extension portion 714 is set larger than the volume of the second connecting portion 713. With such a configuration, a larger amount of heat can be stored in the extension portion 714 and hence, the generation of heat by the conductive members (the bus bar 710 and the relay terminal 811) can be suppressed whereby a temperature rise of the conductive member can be suppressed more effectively. Accordingly, in the energy storage apparatus 10, a temperature rise can be suppressed with the simple configuration.

### [5 Description of modifications]

The energy storage apparatus 10 according to the embodiment has been described heretofore. However, the present invention is not limited to the above-described embodiment. That is, the embodiment disclosed this time is illustrative in all aspects, and is not limitative. The present invention includes all alterations which fall within the scope of claims or are considered equivalent to the present invention called for in claims.

### (Modification 1)

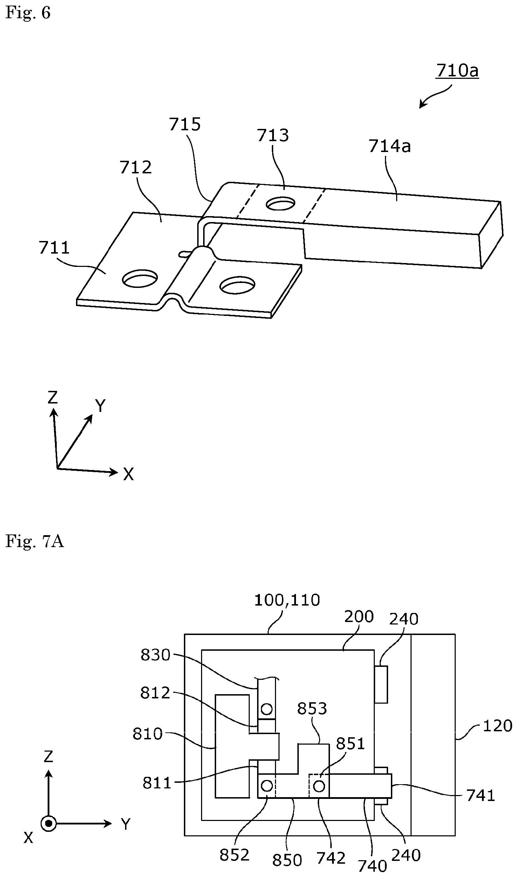

In the above-described embodiment, the width of the extension portion 714 of the bus bar 710 is set larger than the width of the second connecting portion 713 in the Y-axis direction (third direction). However, the extension portion may have a larger thickness than the second connecting portion 713 in the Z-axis direction (first direction). Fig. 6 is a perspective view illustrating the configuration of a bus bar 710a according to the modification 1 of the embodiment. To be more specific, Fig. 6 is a view that corresponds to Fig. 4. As illustrated in Fig. 6, a bus bar 710a according to the present modification includes an extension portion 714a in place of the extension portion 714 of the bus bar 710 in the above-described embodiment. Other configurations of the present modification are substantially the same as the corresponding configurations in the above-described embodiment and hence, the detailed description of other configurations will be omitted.

The extension portion 714a is a rectangular parallelepiped (block-shaped) portion having a larger thickness than the second connecting portion 713 in the Z-axis direction (the first direction). In a case where the thickness of the second connecting portion 713 in the Z-axis direction is not constant, the thickness of the extension portion 714a in the Z-axis direction is set larger than an average value of the width of the second connecting portion 713 in the Z-axis direction. As described above, the extension portion 714a has the larger width (thickness) than the second connecting portion 713 in the direction orthogonal to the extending direction (the X-axis direction) of the extension portion 714a (in the Z-axis direction in the modification). The extension portion 714a has a larger length than the second connecting portion 713 in the X-axis direction (in the second direction). In a case where the length of the second connecting portion 713 in the X-axis direction is not constant, the length of the extension portion 714a in the X-axis direction is set larger than an average value of the length of the second connecting portion 713 in the X-axis direction. The extension portion 714a has the same width as the second connecting portion 713 in the Y-axis direction.

With such a configuration, the extension portion 714a has a larger cross-sectional area than the second connecting portion 713 with respect to a plane orthogonal to the X-axis direction (the second direction) that is the extending direction of the extension portion 714a (a plane parallel to the YZ plane). The extension portion 714a has a larger volume than the second connecting portion 713. That is, the extension portion 714a is thick in the Z-axis direction and extends in the X-axis direction so as to have a larger volume than the second connecting portion 713. The extension portion 714a has the thickness approximately 5 to 10 times as large as the width of the second connecting portion 713 in the Z-axis direction, and has the length approximately 2 to 3 times as large as the length of the second connecting portion 713 in the X-axis direction. With such a configuration, when the second connecting portion 713 generates heat, the extension portion 714a can store the heat of the second connecting portion 713.

As in the present modification, by setting the thickness of the extension portion 714a larger than the thickness of the second connecting portion 713, the volume of the extension portion 714a can be increased. With such a configuration, a larger amount of heat can be stored in the extension portion 714a and hence, the generation of heat by the conductive member (the bus bar 710a and the relay terminal 811 (the first conductive member and the second conductive member)) can be suppressed whereby a temperature rise of the conductive member can be suppressed more effectively. Accordingly, in the energy storage apparatus, a temperature rise can be suppressed with the simple configuration.

The extension portion 714 or 714a (hereinafter, referred to as the extension portion 714 or the like) of the bus bar 710 or 710a (hereinafter, referred to as the bus bar 710 or the like) is not limited to the above-described sizes and shapes. The width of the extension portion 714 or the like may be smaller than the width of the second connecting portion 713 in the Y-axis direction, the thickness of the extension portion 714 or the like may be smaller than the thickness of the second connecting portion 713 in the Z-axis direction, or the length of the extension portion 714 or the like may be smaller than the length of the second connecting portion 713 in the X-axis direction. That is, the extension portion 714 or the like may have a smaller cross-sectional area or a smaller volume than the second connecting portion 713. The extension portion 714 or the like may have any shape such as a curved plate shape, a circular columnar shape, an elongated circular columnar shape, an elliptical columnar shape, a cylindrical shape, or a hollow shape in place of a flat plate shape or a block shape.

### (Modification 2)

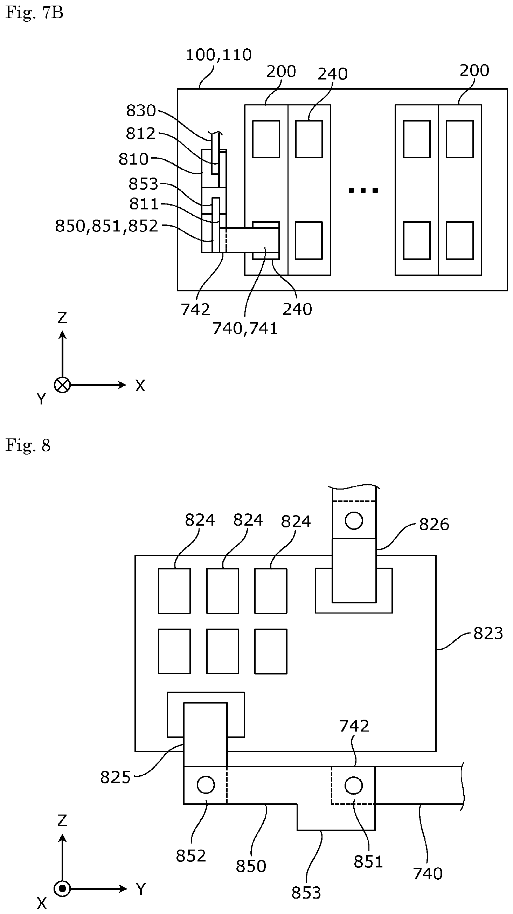

In the above-described embodiment, the electrical component (the relay 810), at least a portion of the first conductive member (the bus bar 710), and at least a portion of the second conductive member (the relay terminal 811) are disposed between the upper surface of the energy storage devices 200 and the lower surface of the outer case lid 120. However, it is sufficient that these component and members are disposed between the outer surface of the energy storage device 200 and the inner surface of the outer case 100. In the above embodiment, the extension portion 714 is provided to the first conductive member (bus bar 710). However, the extension portion 714 may be provided to the second conductive member. Fig. 7A and Fig. 7B are side views illustrating the configuration of a first conductive member (a bus bar 740) and a second conductive member (a bus bar 850) according to a modification 2 of the embodiment. Fig. 7A and Fig. 7B illustrate the configurations of the energy storage device 200, the relay 810 (electrical component), the bus bar 740 (the first conductive member), and the bus bar 850 (the second conductive member) disposed in the outer case 100 by viewing the outer case 100 in a see-through manner.

In the present modification, the relay 810 is an example of the electrical component, the bus bar 740 is an example of the first conductive member, and the bus bar 850 is an example of the second conductive member. As illustrated in Fig. 7A and Fig. 7B, at least a portion of the relay 810, at least a portion of the bus bar 740 and at least a portion of the bus bar 850 are disposed between a side surface of the energy storage device 200 (a side surface (a long side surface) of the case body 220) and an inner surface of the outer case 100 (an inner surface of the outer case body 110). The bus bar 740 includes: a first connecting portion 741 that is connected to the electrode terminal 240 of the energy storage device 200; and a third connecting portion 742 that is connected to the bus bar 850. The bus bar 850 includes: a second connecting portion 851 that is a portion overlapping with the third connecting portion 742 of the bus bar 740 and is connected to the third connecting portion 742 in a state where the second connecting portion 851 is in contact with the third connecting portion 742; a fourth connecting portion 852 that is electrically connected to the relay terminal 811; and an extension portion 853. The extension portion 853 extends from the second connecting portion 851 in a direction away from a path of a current (the Z-axis plus direction in the present modification). The fourth connecting portion 852 is a portion of the second conductive member (the bus bar 850) that is connected to an electrical component (the relay terminal 811).

As described above, it is sufficient that at least one conductive member of the first conductive member and the second conductive member includes: the second connecting portion that is the portion overlapping with the other conductive member and is connected to the other conductive member in a state where the second connecting portion is in contact with the other conductive member; and the extension portion that extends from the second connecting portion in the direction away from the path of a current. Both the first conductive member and the second conductive member may each have the second connecting portion and the extension portion. It is sufficient that the electrical component, at least a portion of the first conductive member, and at least a portion of the second conductive member are disposed between an outer surface of the energy storage device 200 and an inner surface of the outer case 100 that face each other.

As described above, in the above-described embodiment, the extension portion 714 and the like are formed so as to extend in the X-axis plus direction from an end edge of the second connecting portion 713 in the X-axis plus direction. However, the extension portion 714 and the like may extend in the Y-axis minus direction from the end edge of the second connecting portion 713 in the Y-axis minus direction. Alternatively, the extension portion 714 and the like may extend in the Y-axis plus direction from the end edge of the second connecting portion 713 in the Y-axis plus direction.

In the above embodiment, the extension portion 714 and the like are provided to the bus bar 710 or the like. However, the extension portion may be provided to the relay terminal 811 in place of the extension portion 714 or the like of the bus bar 710 or the like, or the extension portion may be provided also to the relay terminal 811 in addition to the extension portion 714 or the like of the bus bar 710 or the like.

In the above embodiment, the bus bar 710 and the like and the relay terminal 811 are exemplified as the first conductive member and the second conductive member respectively. However, the first conductive member and the second conductive member may be formed of any members provided that the first conductive member and the second conductive member are two conductive members that are disposed on a path of a current flowing through the energy storage device 200. As an example of the set of the first conductive member and the second conductive member, the bus bar 830 and the relay terminal 812, the bus bar 830 and the external terminal 121, the bus bar 720 and the shunt resistor terminal 821, the bus bar 840 and the shunt resistor terminal 822, the bus bar 840 and the external terminal 121 and the like are named. A resistor that the shunt resistor 860 includes may be an example of the electrical component, and the shunt resistor terminal 821 or the shunt resistor terminal 822 may be an example of the second conductive member. In a case where the second conductive member is formed of the shunt resistor terminal 821, the first conductive member may be formed of the bus bar 720 and the extension portion may be formed on the bus bar 720. Any one of the bus bars 710 and the like, 720, 730, 830 or 840 may be formed of two members, and these two members may be an example of the first conductive member and the second conductive member. A plurality of first conductive members and a plurality of second conductive members (a plurality of extension portions) may be provided. As described in the above-described embodiment, it is preferable that the first conductive member or the second conductive member (extension portion) be disposed near the heating element such as the relay 810. This is because a temperature rise of the conductive member due to the heating element can be effectively suppressed.

### (Modification 3)

In the above embodiment, the electrical component to which the second conductive member (the relay terminal 811) is connected is the relay 810. However, any electrical component may be used as the electrical component to which the second conductive member is connected. Fig. 8 is a side view illustrating the configuration where a second conductive member (a bus bar 850) according to the modification 3 of the embodiment is connected to an electrical component (FET 824). Fig. 8 illustrates the configuration where the second conductive member (the bus bar 850) and the electrical component (FET 824) are mounted on a circuit board 823 in place of the second conductive member (the bus bar 850) and the electrical component (the relay 810) illustrated in Fig. 7A.

In the modification, the FET 824 is an example of the electrical component, the bus bar 740 is an example of the first conductive member, and the bus bar 850 is an example of the second conductive member. That is, in the present modification, the relay 810 of the modification 2 is replaced with the FET 824. The FET 824 is a field effect transistor (FET) mounted on the circuit board 823, and a plurality of FETs 824 are mounted on the circuit board 823. In the present modification, six FETs 824 are mounted on the circuit board 823 in a state where six FETs are connected in a three-parallel two-series mode. The FETs 824 are disposed on a path of a current of a main circuit via a wiring pattern of the circuit board 823. The circuit board 823 includes terminals 825 and 826. The bus bar 850 is electrically connected to the FETs 824 as the fourth connecting portion 852 is connected to the terminal 825 of the circuit board 823. The present modification is configured such that the relay 810 is replaced with the FET 824 in the configuration of the modification 2. However, the present modification may be configured such that the relay 810 is replaced with the FET 824 in the configuration described above. In the present modification, the electrical component is formed of the FETs 824. However, the electrical component may be formed of the circuit board 823 on which the FETs 824 are mounted. In this case, the terminal (the terminal 825) of the electrical component is connected to the bus bar 850. As an example of the electrical component, a current detection component (a shunt resistor or the like) may be exemplified instead of the FETs 824.

### (Modification 4)

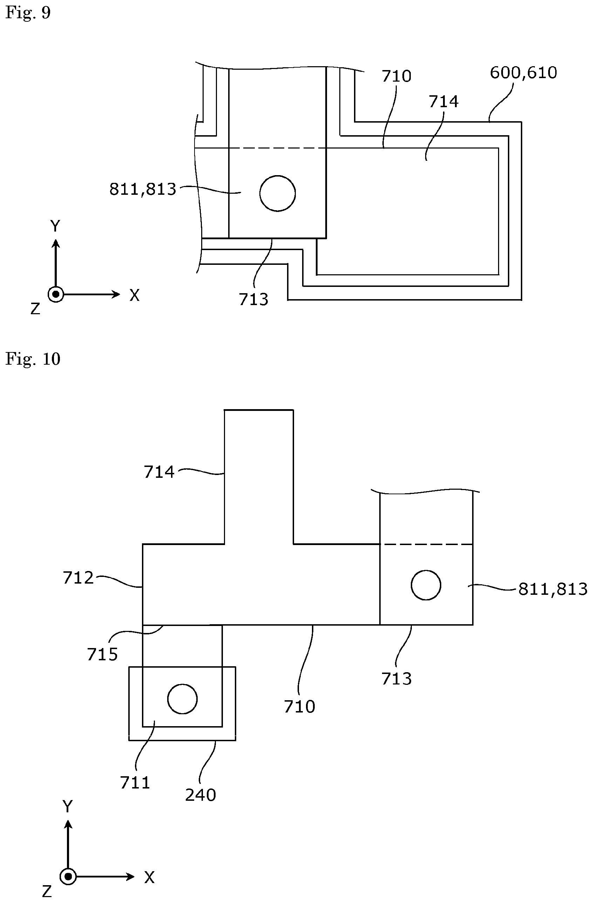

In the above-described embodiment, an insulating member that surrounds the periphery of the extension portion 714 may be provided. Fig. 9 is a top plan view illustrating the configuration of the insulating member that surrounds the periphery of the extension portion 714 according to the modification 4 of the embodiment. In the present modification, the bus bar frame 600 includes a wall portion 610. The wall portion 610 surrounds the periphery of the extension portion 714 that extends from a second connecting portion 713. The wall portion 610 is a wall that surrounds both sides of the extension portion 714 in the Y-axis direction and a side of the extension portion 714 in the X-axis plus direction. The extension portion 714 is mounted on a surface of the bus bar frame 600 in the Z axis plus direction, and is accommodated (housed) in a portion of the bus bar frame 600 surrounded by the wall portion 610. With such a configuration, the periphery of the extension portion 714 is surrounded by the insulating member (the wall portion 610 of the bus bar frame 600) and hence, it is possible to prevent the extension portion 714 from being brought into contact with the energy storage device 200 or the like whereby it is possible to suppress the occurrence of short-circuiting due to the contacting of the extension portion 714 with the energy storage device 200 or the like. In the present modification, the periphery of the extension portion 714 may be surrounded by an insulating member other than the bus bar frame 600.

In place of surrounding the periphery of the extension portion 714 by the insulating member, or in addition to surrounding of the periphery of the extension portion 714 by the insulating member, insulating coating may be formed on the extension portion 714. That is, insulating coating may be formed on the extension portion 714 by applying or laminating an insulating member to an outer surface of the extension portion 714 thus covering the outer surface of the extension portion 714 with the insulating coating. The insulating coating can be formed using a material having an insulating property such as any resin material that is applicable to the outer case 100 described above. With such a configuration, the extension portion 714 can be insulated by the insulating coating and hence, it is possible to prevent the extension portion 714 from being brought into contact with the energy storage device 200 or the like whereby it is possible to suppress the occurrence of short-circuiting between the extension portion 714 and the energy storage device 200 or the like.

### (Modification 5)

In the above-described embodiment, the extension portion 714 of the bus bar 710 extends from the second connecting portion 713. However, the extension portion 714 may extend from the position spaced apart from the second connecting portion 713. Fig. 10 is a top plan view illustrating the configuration of a bus bar 710 according to a modification 5 of the embodiment. In the present modification, an extension portion 714 extends from an intermediate portion 712 between a first connecting portion 711 and a second connecting portion 713 in the Y axis plus direction. The extension portion 714 may extend in the Y axis minus direction, or may extend in other directions. The extension portion 714 may extend from a raised portion 715 or may extend from the first connecting portion 711. As described above, the extension portion 714 may extend from a portion other than a connecting portion (the second connecting portion 713) between the bus bar 710 (a first conductive member) and a relay terminal 811 (a second conductive member).

The configurations that are formed by arbitrarily combining the respective constituent elements that the embodiments described above and the modification examples described above include also fall within the scope of the present invention.

The present invention can be realized not only as such an energy storage apparatus but also as the first conductive member or the combination of the first conductive member and the second conductive member.

### INDUSTRIAL APPLICABILITY

The present invention is applicable to an energy storage apparatus or the like that includes energy storage devices such as lithium ion secondary batteries.

### DESCRIPTION OF REFERENCE SIGNS

10: energy storage apparatus
100: outer case
110: outer case body
120: outer case lid
121: external terminal
122: gas discharge portion
200: energy storage device
210: case
220: case body
230: case lid
231: gas release valve
240: electrode terminal
250: upper gasket
300: spacer
400: end plate
500: side plate
510: bottom plate
600: bus bar frame
610: wall portion
620: gas discharge duct
700, 710, 710a, 720, 730, 740, 830, 840, 850: bus bar
711, 741: first connecting portion
712: intermediate portion
713, 851: second connecting portion
742, 813: third connecting portion
714, 714a, 853: extension portion
715: raised portion
800: electric equipment
810: relay
811, 812: relay terminal
821, 822: shunt resistor terminal
820: circuit board unit
823: circuit board
824: FET
852: fourth connecting portion
860: shunt resistor

## Claims

1. An energy storage apparatus comprising:
an energy storage device;
an electrical component disposed on a path of a current that flows through a main circuit including the energy storage device;
a first conductive member including a first connecting portion that is electrically connected to the energy storage device;
a second conductive member that is connected to the first conductive member and is electrically connected to the electrical component; and
an outer case accommodating the energy storage device, the electrical component, the first conductive member, and the second conductive member, wherein
at least one conductive member of the first conductive member and the second conductive member includes:
a second connecting portion being a portion that overlaps with an other conductive member and is connected to the other conductive member in a state where the second connecting portion is in contact with the other conductive member; and
an extension portion extending from the second connecting portion in a direction away from the path of the current.

2. The energy storage apparatus according to claim 1, wherein the electrical component, at least a portion of the first conductive member, and at least a portion of the second conductive member are disposed between an outer surface of the energy storage device and an inner surface of the outer case, the outer surface and the inner surface facing each other.

3. The energy storage apparatus according to claim 1 or 2, wherein the first conductive member includes a raised portion that is positioned between the first connecting portion and the second connecting portion and extends in a direction away from the energy storage device.

4. The energy storage apparatus according to any one of claims 1 to 3, wherein the extension portion has a larger cross-sectional area than the second connecting portion in a plane orthogonal to the extending direction of the extension portion.

5. The energy storage apparatus according to any one of claims 1 to 4, wherein the extension portion has a larger width than the second connecting portion in a direction orthogonal to the extending direction of the extension portion.

6. The energy storage apparatus according to any one of claims 1 to 5, wherein the extension portion has a larger volume than the second connecting portion.

7. The energy storage apparatus according to any one of claims 1 to 6, wherein an insulating coating is formed on the extension portion.

8. The energy storage apparatus according to any one of claims 1 to 7, further comprising an insulating member that surrounds a periphery of the extension portion.
